# FASCICULE DE BREVET EUROPEEN

(11) **EP 3 521 126 B1**
(45) Date de publication et mention de la délivrance du brevet: **08.06.2022**
(21) Numéro de dépôt: 19154037.6
(22) Date de dépôt: 28.01.2019
(51) Int. Cl.: B60M 1/28, B61D 15/02

(54) **SYSTÈME D'AIDE AU DRESSAGE ET À LA DÉPOSE D'ÉLÉMENT DE CONSTRUCTION LONGITUDINAL ET VÉHICULE DE MANUTENTION D'ÉLÉMENT DE CONSTRUCTION LONGITUDINAL ÉQUIPÉ D'UN TEL SYSTÈME**
HILFSSYSTEM ZUM RICHTEN UND VERLEGEN EINES LÄNGLICHEN BAULEMENTS, UND FAHRZEUG ZUM FÖRDERN EINES LÄNGLICHEN BAUELEMETS, DAS MIT EINEM SOLCHEN SYSTEM AUSGESTATTET IST
SYSTEM TO ASSIST WITH THE RAISING AND DEPOSITING OF A LONGITUDINAL CONSTRUCTION ELEMENT AND VEHICLE FOR HANDLING A LONGITUDINAL CONSTRUCTION ELEMENT EQUIPPED WITH SUCH A SYSTEM

(30) Priorité: 29.01.2018 FR 1870061
(43) Date de publication de la demande: 07.08.2019
(73) Titulaire: Novium, 71230 Saint-Vallier (FR)
(72) Inventeur: CHATELET, David, 71230 Saint Vallier (FR); MAES, Thomas, 71410 Sanvignes Les Mines (FR)
(74) Mandataire: Cabinet Chaillot

(56) Documents cités:
- EP-A1- 3 070 203
- EP-A2- 0 881 190
- DE-U1-202006 011 495
- DE-U1-202006 011 495

## Description

La présente invention concerne le domaine de la manutention d'éléments de construction longitudinaux, tels que des poteaux, et porte en particulier sur un système d'aide au dressage et à la dépose de tels éléments permettant le transfert d'un élément entre des positions verticale ou debout et horizontale ou couchée ainsi que son déplacement en position horizontale, et sur un véhicule de manutention équipé d'un tel système.

Par élément de construction longitudinal, on désigne tout élément allongé du type poteau porteur de câbles téléphoniques ou électriques, pilier, pylône ou analogue.

Il existe des besoins pour des systèmes permettant de sécuriser et de rationaliser le déplacement dans l'espace d'éléments de construction longitudinaux entre différentes positions dans lesquelles lesdits éléments ne présentent pas la même orientation.

Par exemple, un tel besoin est rencontré dans le domaine ferroviaire, lorsqu'il s'agit de remplacer les poteaux et poutres portant la ou les caténaires. Dans ce cas, les nouveaux poteaux et poutres doivent être posés, généralement au voisinage des anciens poteaux et poutres, puis les anciens poteaux et poutres sont déposés après que la ou les caténaires ont été reliées aux nouvelles poutres.

On souligne ici que ces opérations se font alors que la ou les caténaires sont encore en place. En effet, le remplacement des poteaux et poutres d'une portion de voie ferrée se fait généralement la nuit, lorsque les trains ne circulent pas, et la voie ferrée doit pouvoir être rendue à la circulation la journée.

Actuellement, les opérations de pose et de dépose des poteaux et poutres s'effectuent à l'aide d'une grue classique, à savoir une grue montée sur un véhicule et comprenant une base montée fixe sur le véhicule, une flèche télescopique reliée à la base et orientable dans l'espace, et des moyens de manutention d'un poteau ou d'une poutre qui consistent en une élingue dont une extrémité présente des moyens d'accrochage au poteau ou à la poutre et dont l'autre extrémité est accrochée à un appareil de levage, généralement au câble d'un treuil. L'opérateur actionne à distance les différents moyens de commande permettant de déplacer dans l'espace la flèche et d'actionner l'appareil de levage pour faire monter ou faire descendre le poteau ou la poutre.

La manutention à l'aide d'une telle grue est très délicate, car elle se fait de nuit, avec les caténaires en place, de sorte que les risques de collision avec l'environnement sont élevés. Ces risques de collision sont d'autant plus élevés que la commande du déplacement de la flèche est elle-même très délicate, du fait que le poteau manutentionné est suspendu à une élingue et déplacé simultanément dans les trois directions de l'espace. Le succès de l'opération repose ainsi également sur la compétence de l'opérateur de la grue. Par ailleurs, le soulèvement et le déplacement du poteau dans les trois directions de l'espace peuvent provoquer un couple de pivotement. De ce fait, la manipulation du poteau n'est pas commode et exige des interventions manuelles peu précises et parfois dangereuses, du fait de la masse à déplacer.

La Société déposante a donc cherché une solution permettant de sécuriser et de faciliter la pose et la dépose d'éléments de construction longitudinaux de type poteaux.

En conséquence, l'invention a pour but de proposer un système d'aide au dressage et à la dépose d'élément de construction longitudinal, tel qu'un poteau, et un véhicule équipé de ce système, permettant de maintenir la base du poteau pendant la phase dangereuse de sa manutention, et donc permettant de supprimer les risques d'écrasements ou de collisions dus à l'élingage, permettant de maîtriser dans l'espace la cinématique d'évolution du poteau manœuvré, évitant la rotation du poteau sur lui-même, ne nécessitant aucune intervention manuelle, permettant d'augmenter la précision de manipulation, permettant de rentrer le poteau sur le véhicule pour plus de sécurité, et offrant un gain de temps.

Le brevet allemand DE 20 2006 011495 U1 décrit un système tel que divulgué dans le préambule de la revendication 1.

La présente invention a pour objet un système d'aide au dressage et à la dépose d'élément de construction longitudinal, tel qu'un poteau, lequel élément de construction longitudinal est destiné à être suspendu à un engin de manutention de type grue par son sommet opposé à sa base, lequel système comprend des moyens de guidage du pivotement de l'élément de construction longitudinal entre des positions verticale et horizontale, les moyens de guidage comprenant une partie de préhension apte à saisir ledit élément longitudinal au voisinage de la base de celui-ci et une partie de support portant la partie de préhension et destinée à être montée sur la plateforme d'un véhicule ayant une direction longitudinale, la partie de préhension étant reliée à la partie de support par une liaison autorisant un pivotement libre de la partie de préhension autour d'un axe de pivotement horizontal s'étendant suivant une direction dite transversale, laquelle direction transversale est, une fois la partie de support montée sur le véhicule, perpendiculaire à la direction longitudinale du véhicule, caractérisé par le fait que la partie de support comprend un élément de guidage en translation destiné à être fixé transversalement sur la plateforme du véhicule, et au moins un bras mobile portant la partie de préhension et monté sur l'élément de guidage de façon à être déplaçable en translation dans les deux sens le long de l'élément de guidage par des moyens de commande, de telle sorte que la partie de préhension est apte à être déplacée entre une position opérationnelle dans laquelle la partie de préhension est latéralement en porte-à-faux vis-à-vis du véhicule, et une position de transport dans laquelle la partie de préhension a été déplacée en direction du centre de la plateforme et n'est pas latéralement en porte-à-faux vis-à-vis du véhicule.

Ainsi, le système maintient l'élément longitudinal au niveau de sa base d'une manière telle que le pivotement de ce dernier lors de son dressage ou de sa dépose se fait avec sa base comme point de pivotement, ce qui conduit à un gain de temps lors du pivotement de cet élément entre les positions horizontale et verticale et à une sécurité accrue.

De préférence, la liaison autorisant un pivotement libre de la partie de préhension est une liaison pivot. On pourrait également prévoir des liaisons ayant un ou plusieurs degrés de liberté autres que le seul pivotement autour dudit axe de pivotement.

Un tel guidage en translation linéaire permet de manipuler l'élément longitudinal d'un côté ou de l'autre du véhicule, de manière décalée par rapport au véhicule, et permet donc la manutention d'un élément longitudinal de type poteau de caténaire ou poteau de ligne électrifiée. En outre, ce guidage en translation permet de rentrer l'élément longitudinal sur le véhicule afin, par exemple, de le démonter en toute sécurité sur le véhicule.

De préférence, l'élément de guidage est un rail-guide de glissière, le au moins un bras mobile étant une barre montée coulissante dans le rail-guide.

Les moyens de commande du déplacement du au moins un bras mobile peuvent comprendre au moins un vérin.

La partie de préhension peut être une pince comprenant au moins deux mors aptes à enserrer l'élément de construction longitudinal, chaque mors étant, de préférence, monté à rotation autour d'un axe de rotation horizontal orthogonal à l'axe de pivotement de la partie de préhension, étant prévus des moyens de commande d'ouverture et de fermeture de pince. On pourrait prévoir plus de deux mors, par exemple en cas de dépose et/ou dressage d'éléments de construction non linéaires.

Avantageusement, au moins une face de butée limite le pivotement vers le haut et/ou vers le bas de la partie de préhension.

Dans un mode de réalisation particulier de l'invention, le système comprend en outre au moins un reposoir destiné à être monté sur la plateforme du véhicule à distance des moyens de guidage, le reposoir comprenant une partie de retenue ayant une face d'appui horizontale située à une même hauteur que la partie de préhension, une fois les moyens de guidage et le reposoir montés sur le véhicule, de façon à être apte à servir d'appui à l'élément de construction longitudinal placé dans une position horizontale.

La partie de retenue est portée par une partie de support ayant au moins un bras mobile monté à translation sur un élément de guidage fixe destiné à être fixé transversalement sur la plateforme du véhicule, le au moins un bras mobile étant déplaçable en translation dans au moins un sens le long de l'élément de guidage par des moyens de commande, de telle sorte que la partie de retenue est apte à être déplacée entre une position opérationnelle dans laquelle la partie de retenue est latéralement en porte-à-faux vis-à-vis du véhicule, et une position de transport dans laquelle la partie de retenue a été déplacée en direction du centre de la plateforme et n'est pas latéralement en porte-à-faux vis-à-vis du véhicule.

La présente invention a également pour objet un véhicule, de préférence ferroviaire, de manutention d'élément de construction longitudinal, le véhicule comprenant au moins un wagon plat, caractérisé par le fait qu'il est équipé d'au moins un système d'aide au dressage et à la dépose d'élément de construction longitudinal tel que défini ci-dessus, disposé sur la plateforme du wagon plat, le véhicule étant en outre, de préférence, équipé d'une grue de levage à bras télescopiques montée sur ledit wagon plat.

Le véhicule peut comprendre un seul système s'étendant le long d'une direction transversale à l'axe longitudinal du wagon plat, d'un bord latéral à l'autre du wagon plat, de telle sorte que la partie de préhension est apte à être placée en porte-à-faux par rapport au wagon plat, d'un côté ou de l'autre de celui-ci.

Le véhicule peut comprendre deux systèmes s'étendant le long d'une direction transversale à l'axe longitudinal du wagon plat, et disposés de manière symétrique l'un par rapport à l'autre par rapport à l'axe longitudinal du wagon plat.

Pour mieux illustrer l'objet de la présente invention, on va en décrire ci-après, à titre indicatif et non limitatif, un mode de réalisation préféré avec référence au dessin annexé.

Sur ce dessin :
- la Figure 1 est une vue en perspective d'un système d'aide au dressage et à la dépose d'élément de construction longitudinal selon un mode de réalisation préféré de la présente invention, le système étant monté sur la plateforme d'un véhicule ;
- la Figure 2 est une vue en perspective d'un véhicule ferroviaire de manutention d'élément de construction longitudinal selon un mode de réalisation préféré de la présente invention, le véhicule, ici un wagon plat, étant équipé du système de la Figure 1 positionné d'un côté du véhicule ;
- la Figure 3 est une vue analogue à la Figure 2, le système étant positionné d'un autre côté du véhicule ; et
- les Figures 4 à 10 sont des vues en perspective du véhicule de la Figure 2, à différents temps lors de la dépose d'un poteau.

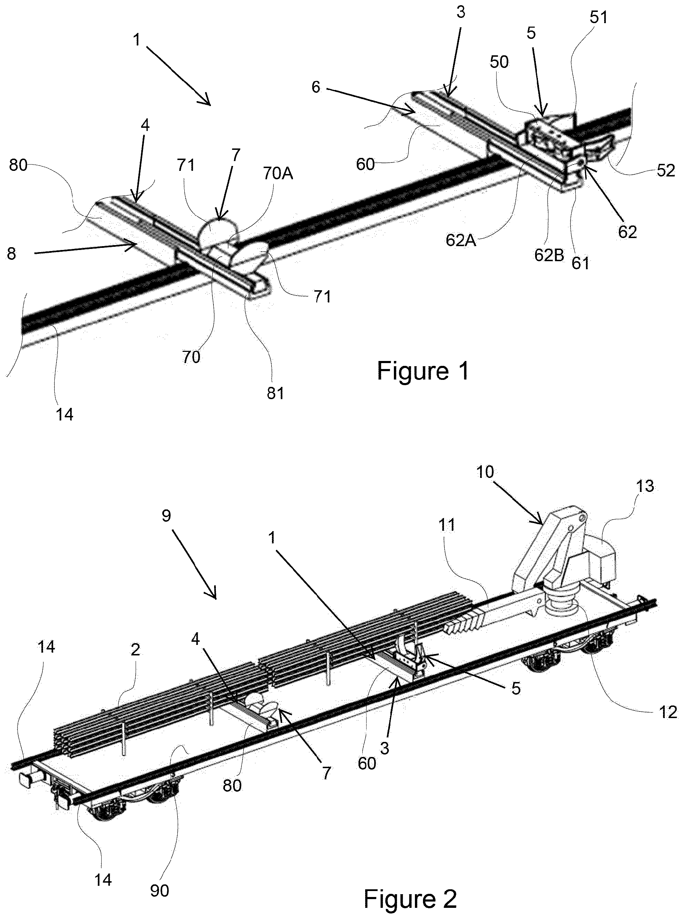

Si l'on se réfère tout d'abord à la Figure 1, on peut voir qu'un système 1 d'aide au dressage et à la dépose d'un élément de construction longitudinal 2 selon un mode de réalisation préféré de la présente invention comprend des moyens de guidage 3 et un reposoir 4. Les moyens de guidage 3 comprennent une partie de préhension 5 et une partie de support 6. Le reposoir 4 comprend une partie de retenue 7 et une partie de support 8.

Les moyens de guidage 3 sont destinés à maintenir la base d'un élément de construction longitudinal ou poteau 2 pendant le pivotement de ce poteau 2 entre des positions verticale et horizontale.

La partie de préhension 5 se présente sous la forme d'une pince apte à enserrer la base d'un poteau 2. La pince 5 comprend un corps de pince 50, deux mors 51, 52, un axe de rotation (non visible) pour chaque mors 51, 52 et des moyens de commande (non représentés) du mouvement de rotation des mors 51, 52 autour de leurs axes.

Chaque mors 51, 52 présente une extrémité de liaison au corps de pince 50 et une extrémité libre opposée. L'extrémité libre est recourbée vers l'intérieur de la pince 5. Les deux mors 51, 52 sont disposés dans un même plan, et s'étendent en regard l'un de l'autre, avec les extrémités libres de chaque mors 51, 52 dirigées l'une vers l'autre. On comprendra aisément que les mors 51, 52 sont dimensionnés pour qu'en position ouverte, l'espacement entre les extrémités libres soit suffisant pour permettre le passage d'un poteau 2, et qu'en position fermée les mors 51, 52 sont en contact de part et d'autre du poteau 2.

Un trou traversant est prévu au niveau de l'extrémité de liaison de chaque mors 51, 52, pour le passage de l'axe de rotation du mors 51, 52. Ainsi, les axes de rotation des mors 51, 52 s'étendent perpendiculairement à la direction d'extension des mors 51, 52.

Les deux axes de rotation des mors 51, 52 sont portés par le corps de pince 50. Le corps de pince 50 se présente sous la forme d'un profilé de section transversale rectangulaire ayant donc deux faces rectangulaires en regard l'une de l'autre et deux faces carrées en regard l'une de l'autre.

Les deux axes de rotation des mors 51, 52 sont fixés au corps de pince 50, entre les faces rectangulaires de celui-ci.

Le corps de pince 50 est articulé à pivotement à la partie de support 6 des moyens de guidage 3.

La partie de support 6 supporte ainsi la partie de préhension 5 montée libre en pivotement. La partie de support 6 comprend un élément de guidage fixe 60, un bras mobile 61, des moyens de commande (non représentés) du déplacement du bras mobile 61 par rapport à l'élément de guidage fixe 60, et une liaison pivot 62 pour le pivotement libre de la partie de préhension 5.

L'élément de guidage fixe 60 est un rail-guide de glissière. Le rail-guide 60 se présente sous la forme d'un profilé de section en U ouvert vers le haut, comportant une âme et deux ailes repliées l'une vers l'autre.

Le bras mobile 61 se présente sous la forme d'un profilé de forme et dimensions telles que le bras 61 est apte à coulisser dans le rail-guide 60. La longueur du bras 61 est inférieure ou égale à la longueur de l'élément de guidage 60.

Le bras mobile 61 est guidé en déplacement linéaire le long de l'élément de guidage 60 par des moyens de commande. De tels moyens peuvent être un ou plusieurs vérins ou tout autre moyen approprié.

Il convient de noter que le bras mobile 61 peut être constitué d'une pluralité de sections de bras télescopiques montées coulissantes les unes dans les autres, avec le bras le plus inférieur monté coulissant dans l'élément de guidage 60, et le bras le plus supérieur portant la partie de préhension 5.

Le bras 61 portant la partie de préhension 5 est pourvu de la liaison pivot 62 qui est formée ici par un profilé en U 62A portant des axes de pivotement horizontaux 62B.

Le profilé en U 62A est monté sur le bras mobile 61, soit de manière fixe à la région d'extrémité libre du bras mobile 61, soit de manière mobile en déplacement linéaire le long du bras mobile 61. Le profilé en U 62A est ouvert vers le côté et comporte une âme verticale et deux ailes verticales en regard l'une de l'autre. Un trou traversant est prévu à l'extrémité de chacune des deux ailes, les deux trous traversant étant coaxiaux.

Un axe de pivotement horizontal 62B s'étend à travers chaque trou traversant du profilé en U 62A et également à travers des trous traversants réalisés dans les faces carrées du profilé du corps de pince 50. Ainsi, le corps de pince 50 portant les mors 51, 52 est articulé à pivotement autour des axes de pivotement 62B.

Grâce à cette liaison pivot 62, la partie de préhension 5 est donc orientable entre une position opérationnelle, dans laquelle les mors 51, 52 s'étendent dans un plan horizontal de telle sorte qu'un poteau 2 enserré par les mors 51, 52 s'étend verticalement dans une position debout, et une position de transport, dans laquelle les mors 51, 52 s'étendent dans un plan vertical avec les extrémités libres des mors 51, 52 vers le haut de telle sorte qu'un poteau 2 enserré par les mors 51, 52 s'étend horizontalement dans une position couchée.

Il convient de noter que bien que la liaison pivot 62 autorise un pivotement libre de la partie de préhension 5 autour des axes de pivotement 62B, le pivotement vers le haut et/ou vers le bas peut être limité, notamment pas des faces de butée (non représentées). Par exemple, pour limiter le pivotement vers le haut, le profilé en U 62A pourrait avoir une âme verticale prolongée vers le haut afin de venir en butée contre les mors 51, 52 lorsque ceux-ci s'étendent verticalement vers le haut. Pour limiter le pivotement vers le bas, le profilé en U 62A pourrait être posé sur une plaque inférieure faisant saillie latéralement par rapport au bras mobile 61, de telle sorte que lorsque les mors 51, 52 s'étendent dans un plan horizontal vers le côté, les mors 51, 52 viennent en appui contre la plaque inférieure.

Le reposoir 4 est destiné à supporter le poteau 2 dans la position couchée, lequel poteau 2 est maintenu à sa base par les moyens de guidage 3. Le reposoir 4 comprend une partie de retenue 7 et une partie de support 8.

La partie de retenue 7 se présente sous la forme d'un profilé de section à forme générale en U ouvert vers le haut ayant une âme horizontale 70 et deux ailes 71 s'étendant vers le haut. L'âme 70 a une face supérieure 70A appelée face d'appui horizontale 70A sur laquelle le poteau 2 couché prendra appui. Les deux ailes 71 s'étendent vers le haut en étant légèrement inclinées vers l'extérieur de la partie de retenue 7. Le bord supérieur des ailes 71 est arrondi.

La partie de retenue 7 est supportée par la partie de support 8.

la partie de support 8 du reposoir 4 comprend un élément de guidage fixe 80, au moins un bras mobile 81, et des moyens de commande (non représentés) du déplacement du bras mobile 81 par rapport à l'élément de guidage fixe 80.

L'élément de guidage fixe 80 est un rail-guide de glissière. Le rail-guide 80 se présente sous la forme d'un profilé de section en U ouvert vers le haut, comportant une âme et deux ailes repliées l'une vers l'autre.

Le bras mobile 81 se présente sous la forme d'un profilé de forme et dimensions telles que le bras est apte à coulisser dans le rail-guide 80. La longueur du bras 81 est inférieure ou égale à la longueur de l'élément de guidage 80.

Le bras mobile 81 est guidé en déplacement linéaire le long de l'élément de guidage 80 par les moyens commande. De tels moyens peuvent être un ou plusieurs vérins ou tout autre moyen approprié.

Il convient de noter que le bras mobile 81 peut être constitué d'une pluralité de sections de bras télescopiques montées coulissantes les unes dans les autres, avec le bras le plus inférieur monté coulissant dans l'élément de guidage 80, et le bras le plus supérieur portant la partie de retenue 7.

La partie de retenue 7 est montée sur le bras mobile 81, soit de manière fixe à la région d'extrémité libre du bras mobile 81, soit de manière mobile en déplacement linéaire le long du bras mobile 81.

Les déplacements des différentes parties mobiles que sont les mors 51, 52 (pivotement autour d'un axe de pivotement orthogonal à la direction d'extension du mors 51, 52), la partie de préhension 5 (pivotement autour d'un axe de pivotement horizontal 62B), le bras mobile 61 des moyens de guidage 3 et le bras mobile 81 du reposoir 4 (déplacement en translation le long de l'élément de guidage 60 ; 80), sont obtenus par des actionneurs appropriés, bien connus en soi, comme par exemple, des moteurs, des vérins, etc. Ces actionneurs sont commandables à distance par tout moyen approprié de commande à distance, également comme cela est bien connu en soi, comme par exemple par radio émetteur/récepteur. L'opérateur disposera donc d'une télécommande lui permettant de commander les déplacements des différentes parties.

Si l'on se réfère maintenant à la Figure 2, on peut voir que l'on y a représenté une partie d'un véhicule 9 ferroviaire de manutention, qui est ici un wagon de manutention 9.

Le véhicule 9 est destiné au dressage de nouveaux poteaux 2 et à la dépose des anciens poteaux.

On peut voir que ce wagon de manutention 9 est un wagon plat classique, comprenant notamment une plateforme 90.

Le système d'aide 1 est monté sur la plateforme 90. En particulier, les éléments de guidage 60, 80 des moyens de guidage 3 et du reposoir 4 sont fixés par tout moyen approprié sur la plateforme 90, transversalement à la direction longitudinale du wagon de manutention 9, dans la partie médiane de ce dernier. En position montée sur le véhicule 9, la face d'appui 70A de la partie de retenue 7 et la partie de préhension 5 sont situées à une même hauteur et dans l'alignement l'une de l'autre.

Le wagon de manutention 9 porte ici également un engin de manutention 10 de type grue à bras télescopique 11 monté sur la plateforme 90. En particulier, la grue 10 est montée sur une tourelle 12 montée mobile par tout moyen approprié sur la plateforme 90, le long de l'axe longitudinal de la plateforme 90, à la région d'extrémité de la plateforme 90 côté moyens de guidage 3, et est munie de manière usuelle d'un contrepoids 13.

Ainsi, le wagon de manutention 9 porte une grue 10, des moyens de guidage 3 espacés de la grue 10, et éventuellement, un reposoir 4 espacé des moyens de guidage 3.

Comme pour les déplacements des différentes parties mobiles du système 1, les déplacements de la grue 10 pourraient être commandés à distance, par exemple par radio commande.

Le wagon de manutention 9 est également équipé de deux rails 14, chacun fixé le long d'un côté longitudinal respectif de la plateforme 90 et s'étend d'une extrémité à l'autre de celle-ci en vue d'être relié, par des ponts inter-wagons, à un autre wagon, par exemple un wagon de stockage de poteaux.

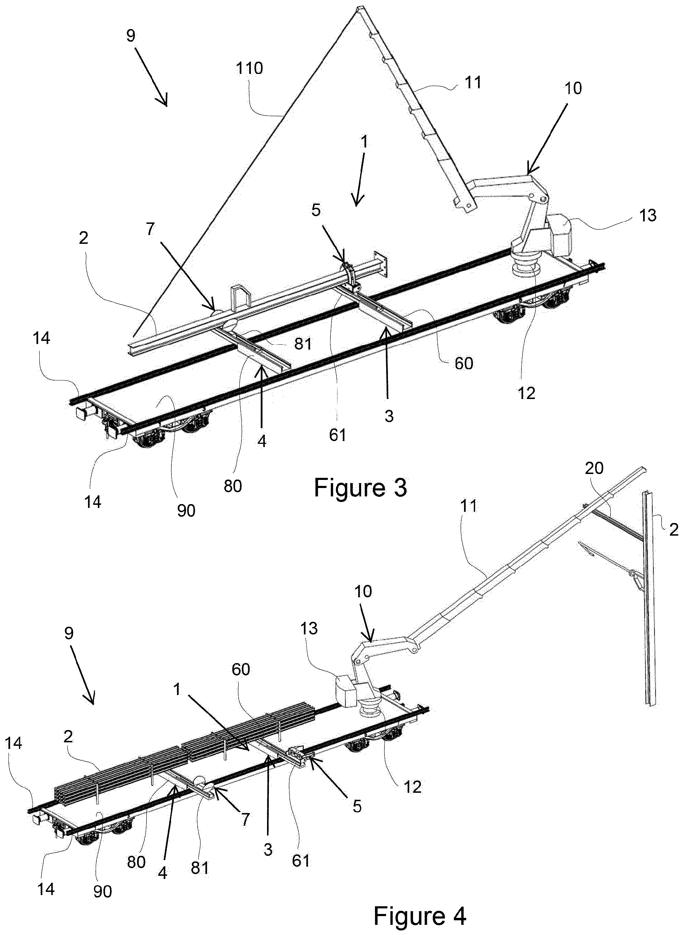

Si l'on se réfère maintenant à la Figure 3, on peut voir que la partie de retenue 7 et la partie de préhension 5 peuvent être montées aussi bien d'un côté longitudinal de la plateforme 90 que de l'autre.

Pour cela, les bras mobiles 61, 81 peuvent être montés de manière amovibles dans les éléments de guidage 60, 80, afin d'être montés dans un sens ou dans l'autre le long de l'élément de guidage 60, 80. Une autre solution consisterait à monter la partie de retenue 7 et la partie de préhension 5 de manière mobile en translation le long du bras mobile 61, 81. Encore une autre solution consisterait à prévoir deux parties de retenue 7 et deux parties de préhension 5 sur le bras mobile 61, 81, une à chaque extrémité du bras mobile 61, 81. Finalement, le wagon 9 pourrait porter deux systèmes 1 disposés de manière symétrique l'un par rapport à l'autre de part et d'autre de l'axe longitudinal de la plateforme 90.

On va maintenant décrire les différentes phases d'utilisation du wagon de manutention 9 pour la dépose d'un poteau 2, avec référence aux Figures 4 à 10.

Sur la Figure 4, la grue 10 est commandée en vue de la saisie d'un poteau 2 vertical à déposer. En particulier, la tourelle 12 est mise en rotation pour orienter le bras télescopique 11 de la grue 10 en direction du poteau 2 à saisir, et le bras télescopique 11 est étendu jusqu'à ce que son extrémité libre atteigne le poteau 2 à saisir. Ensuite, le poteau 2 est relié à la grue 10 au moyen d'une élingue (non représentée) ou de tout autre organe de liaison approprié, de telle sorte que le poteau 2 est suspendu à la grue 10 par son sommet.

Le système 1 a été déplacé hors du wagon de manutention 9, en porte-à-faux par rapport à un côté longitudinal de la plateforme 90, par coulissement des bras mobiles 61, 81 dans les éléments de guidage 60, 80. La partie de retenue 7 et la partie de préhension 5 sont alignées l'une avec l'autre dans la direction longitudinale du véhicule 9 et situées à une même hauteur. La pince de la partie de préhension 5 est ouverte vers le côté grue 10, de sorte que la pince peut saisir un poteau 2 vertical par le côté.

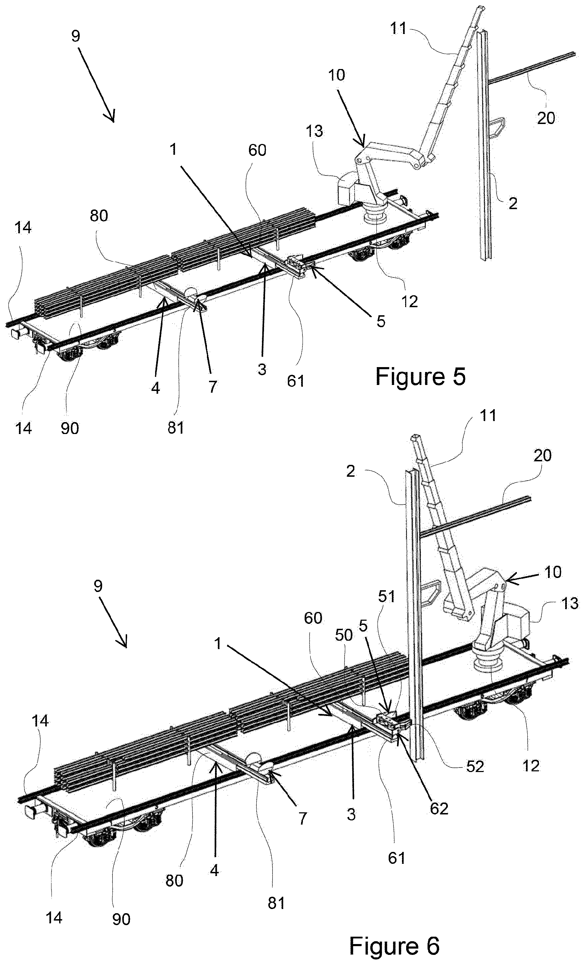

Sur la Figure 5, le poteau 2 est déplacé par la grue 10, tout en restant sensiblement vertical, en direction des moyens de guidage 3.

Sur la Figure 6, le poteau 2 est amené en regard de l'ouverture de la pince, à proximité étroite de celle-ci, tout en restant sensiblement vertical, par déplacement de la grue 10, en particulier, par rotation de la tourelle 12 et par rétractation du bras télescopique 11.

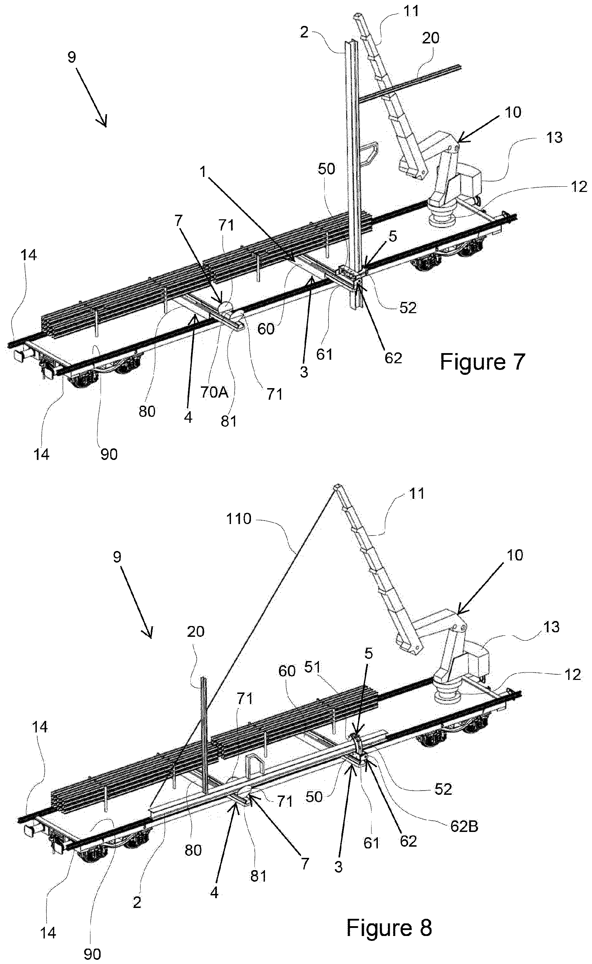

Sur la Figure 7, le poteau 2, sensiblement vertical, suspendu à la grue 10, est placé dans l'ouverture de la pince, avec la base du poteau 2 en contact avec le corps de pince 50. Ensuite, la pince est fermée de telle sorte que la base du poteau 2 est enserrée par les mors 51, 52 dont les extrémités libres sont en contact. La base du poteau 2 est donc maintenue et évite tout risque de balancement du poteau 2.

Sur la Figure 8, la base du poteau 2 étant maintenue dans la pince, le sommet du poteau 2 est abaissé en direction de la plateforme 90 par la grue 10, notamment à l'aide d'un treuil 110 de la grue 10. En raison du montage à pivotement libre de la partie de préhension 5 par rapport à la partie de support 6, la partie de préhension 5 enserrant la base du poteau 2 est amenée à pivoter vers le haut autour de l'axe de pivotement horizontal 62B, permettant de faire passer le poteau 2 de la position verticale à la position horizontale. La partie de préhension 5 pivote jusqu'à ce que les mors 51, 52 de la pince 5 s'étendent dans un plan vertical, position à laquelle une région du poteau 2 située entre la base et le sommet du poteau 2 vient reposer contre la face d'appui 70A du reposoir 4.

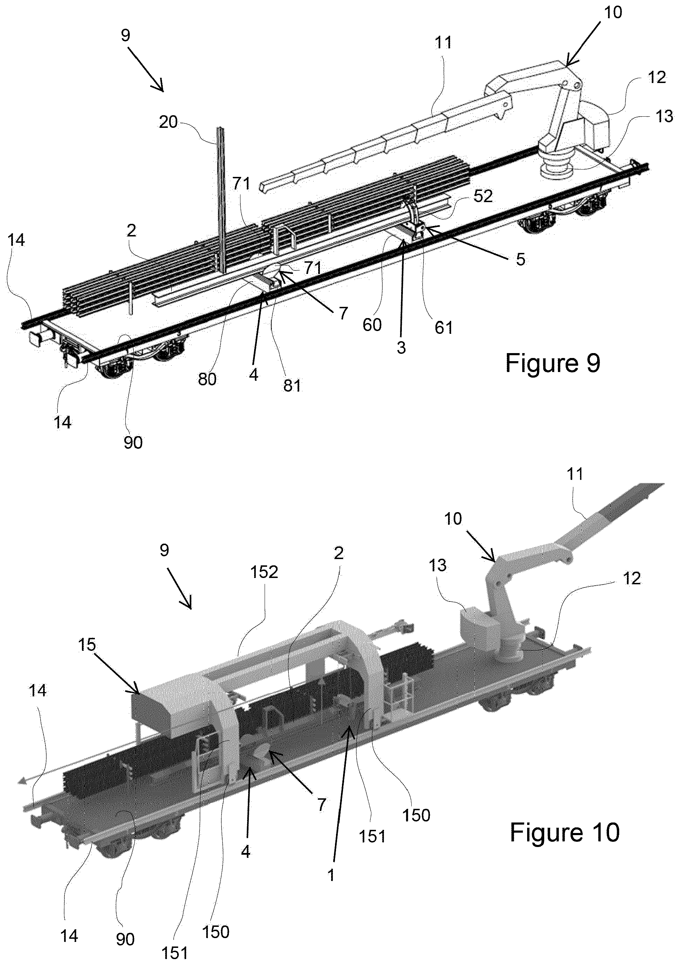

Sur la Figure 9, le poteau 2 en position couchée est rentré sur le wagon 9, par guidage en translation des bras mobiles 61, 81 le long des éléments de guidage 60, 80 en direction du centre du wagon 9.

Une fois les moyens de guidage 3 et le reposoir 4 rentrés sur le wagon 9, la pince peut être ouverte et le poteau 2 couché peut éventuellement être démonté, par exemple pour enlever la console 20, puis stocké dans une zone de stockage de poteau, qui est ici prévue sur la plateforme 90 mais qui pourrait sinon se trouver sur un autre wagon de stockage auquel le wagon de manutention 9 est relié par des ponts inter-wagons.

Sur la Figure 10, un portique 15 monté à translation le long des rails 14 du wagon de manutention 9, et portant des moyens de manutention aptes à saisir et relâcher de manière sélective un élément de construction longitudinal 2 et à le déplacer au moins verticalement, de préférence à la fois horizontalement et verticalement, est déplacé de manière à être positionné au-dessus de la zone de stockage des poteaux 2 déposés.

Comme on peut le voir, ce portique 15 est monté à translation sur les rails 14 par des organes de roulement 150, comme par exemple des roues 150, avec une roue 150 à chaque extrémité inférieure de deux arches 151 reliées par un longeron central 152.

Les moyens de manutention du portique 15 sont alors commandés pour saisir les poteaux 2 déposés et les déplacer vers un autre wagon de stockage.

On comprendra que l'on procède de la même manière pour la dépose d'un poteau 2 de l'autre côté des voies. On constate donc ici l'intérêt que la partie de préhension 5 et la partie de retenue 7 soit déplaçables en translation transversalement à la direction longitudinale du wagon de manutention 9, car cela permet de mettre le poteau 2 en porte-à-faux d'un côté ou de l'autre dudit wagon 9, en fonction du côté où se trouve le poteau 2 à saisir.

On comprendra aisément que le système 1 peut également être utilisé pour le dressage de poteaux 2. Dans ce cas, les étapes sont inversées par rapport à l'opération de dépose d'un poteau 2.

En particulier, pour la mise en place d'un nouveau poteau 2, un poteau 2 stocké dans la zone de stockage de poteaux du wagon de manutention 9 est placé sur le système 1, ce dernier étant en position rentrée sur le wagon 9, avec la pince ouverte vers le haut. Le poteau 2 est donc placé en position couchée sur le système 1, avec une région du poteau 2 reposant contre la face d'appui 70A du reposoir 4 et la base du poteau 2 en appui contre le corps de pince 50.

Ensuite, la fermeture de la pince est commandée, de telle sorte que la base est enserrée par la partie de préhension 5.

Une fois la pince 5 fermée, le sommet du poteau 2 est relié à la grue 10, comme représenté sur la Figure 9.

Ensuite, le reposoir 4 et les moyens de guidage 3 sont déplacés simultanément et à une même vitesse à l'opposé du centre du wagon 9, jusqu'à ce que le poteau 2 couché soit amené à l'extérieur du wagon 9, le long d'un côté longitudinal de celui-ci, comme représenté sur la Figure 8.

La grue 10 est alors manipulée pour soulever le sommet du poteau 2. Au fur et à mesure que le poteau 2 est soulevé, le poteau 2 s'éloigne du reposoir 4, et les moyens de guidage 3 pivotent autour de l'axe de pivotement horizontal 62B jusqu'à ce que la pince s'étende dans un plan horizontal et donc jusqu'à ce que le poteau 2 adopte une position verticale, comme représenté sur la Figure 7.

Ensuite, l'ouverture de la pince est commandée, de telle sorte que les mors 51, 52 sont écartés l'un de l'autre, comme représenté sur la Figure 6. A cette étape, la base du poteau 2 vertical n'est plus maintenue par les moyens de guidage 3, et le poteau 2 suspendu à la grue 10 peut être déplacé vers sa position finale par commande de la grue 10.

Une fois le poteau 2 déplacé par la grue 10 vers sa position finale, le système 1 peut être à nouveau rentré sur le wagon 9, pour le dressage d'un nouveau poteau 2.

On souligne que, bien qu'il ait été décrit en liaison avec le dressage et la dépose de poteaux dans le domaine ferroviaire, le système 1 peut être utilisé de manière plus générale pour manutentionner dans l'espace tout élément de construction longitudinal 2, et ce d'une manière rapide, aisée et sûre.

Il est bien entendu que le mode de réalisation préféré qui vient d'être décrit a été donné à titre indicatif et non limitatif et que des modifications peuvent être apportées sans que l'on s'écarte pour autant du cadre des revendications annexées.

## Revendications

1. - Système (1) d'aide au dressage et à la dépose d'élément de construction longitudinal (2), tel qu'un poteau, lequel élément de construction longitudinal (2) est destiné à être suspendu à un engin de manutention (10) de type grue par son sommet opposé à sa base, lequel système (1) comprend des moyens (3) de guidage du pivotement de l'élément de construction longitudinal (2) entre des positions verticale et horizontale, les moyens de guidage (3) comprenant une partie de préhension (5) apte à saisir ledit élément longitudinal (2) au voisinage de la base de celui-ci et une partie de support (6) portant la partie de préhension (5) et destinée à être montée sur la plateforme (90) d'un véhicule (9) ayant une direction longitudinale, la partie de préhension (5) étant reliée à la partie de support (6) par une liaison autorisant un pivotement libre de la partie de préhension (5) autour d'un axe de pivotement horizontal (62B) s'étendant suivant une direction dite transversale, laquelle direction transversale est, une fois la partie de support (6) montée sur le véhicule (9), perpendiculaire à la direction longitudinale du véhicule (9), **caractérisé par le fait que** la partie de support (6) comprend un élément de guidage en translation (60) destiné à être fixé transversalement sur la plateforme (90) du véhicule (9), et au moins un bras mobile (61) portant la partie de préhension (5) et monté sur l'élément de guidage (60) de façon à être déplaçable en translation dans les deux sens le long de l'élément de guidage (60) par des moyens de commande, de telle sorte que la partie de préhension (5) est apte à être déplacée entre une position opérationnelle dans laquelle la partie de préhension (5) est latéralement en porte-à-faux vis-à-vis du véhicule (9), et une position de transport dans laquelle la partie de préhension (5) a été déplacée en direction du centre de la plateforme (90) et n'est pas latéralement en porte-à-faux vis-à-vis du véhicule (9).

2. - Système (1) selon la revendication 1, **caractérisé par le fait que** la liaison autorisant un pivotement libre de la partie de préhension (5) est une liaison pivot (62).

3. - Système (1) selon l'une des revendications 1 et 2, **caractérisé par le fait que** l'élément de guidage (60) est un rail-guide de glissière, le au moins un bras mobile (61) étant une barre montée coulissante dans le rail-guide (60) .

4. - Système (1) selon l'une quelconque des revendications 1 à 3, **caractérisé par le fait que** la partie de préhension (5) est une pince comprenant au moins deux mors (51, 52) aptes à enserrer l'élément de construction longitudinal (2), chaque mors (51, 52) étant, de préférence, monté à rotation autour d'un axe de rotation horizontal orthogonal à l'axe de pivotement (62B) de la partie de préhension (5), étant prévus des moyens de commande d'ouverture et de fermeture de pince (5).

5. - Système (1) selon l'une quelconque des revendications 1 à 4, **caractérisé par le fait qu'**au moins une face de butée limite le pivotement vers le haut et/ou vers le bas de la partie de préhension (5).

6. - Système (1) selon l'une quelconque des revendications 1 à 5, **caractérisé par le fait qu'**il comprend en outre au moins un reposoir (4) destiné à être monté sur la plateforme (90) du véhicule (9) à distance des moyens de guidage (3), le reposoir (4) comprenant une partie de retenue (7) ayant une face d'appui horizontale (70A) située à une même hauteur que la partie de préhension (5), une fois les moyens de guidage (3) et le reposoir (4) montés sur le véhicule (9), de façon à être apte à servir d'appui à l'élément de construction longitudinal (2) placé dans une position horizontale.

7. - Système (1) selon la revendication 6, **caractérisé par le fait que** la partie de retenue (7) est portée par une partie de support (8) ayant au moins un bras mobile (81) monté à translation sur un élément de guidage fixe (80) destiné à être fixé transversalement sur la plateforme (90) du véhicule (9), le au moins un bras mobile (81) étant déplaçable en translation dans au moins un sens le long de l'élément de guidage (80) par des moyens de commande, de telle sorte que la partie de retenue (7) est apte à être déplacée entre une position opérationnelle dans laquelle la partie de retenue (7) est latéralement en porte-à-faux vis-à-vis du véhicule (9), et une position de transport dans laquelle la partie de retenue (7) a été déplacée en direction du centre de la plateforme (90) et n'est pas latéralement en porte-à-faux vis-à-vis du véhicule (9).

8. - Véhicule (9), de préférence ferroviaire, de manutention d'élément de construction longitudinal (2), le véhicule (9) comprenant au moins un wagon plat, **caractérisé par le fait que** qu'il est équipé d'au moins un système (1) d'aide au dressage et à la dépose d'élément de construction longitudinal (2) tel que défini à l'une quelconque des revendications 1 à 7, disposé sur la plateforme (90) du wagon plat (9), le véhicule (9) étant en outre, de préférence, équipé d'une grue (10) de levage à bras télescopiques (11) montée sur ledit wagon plat (9).

9. - Véhicule (9) selon la revendication 8, **caractérisé par le fait qu'**il comprend un seul système (1) s'étendant le long d'une direction transversale à l'axe longitudinal du wagon plat (9), d'un bord latéral à l'autre du wagon plat (9), de telle sorte que la partie de préhension (5) est apte à être placée en porte-à-faux par rapport au wagon plat (9), d'un côté ou de l'autre de celui-ci.

10. - Véhicule (9) selon la revendication 8, **caractérisé par le fait qu'**il comprend deux systèmes (1) s'étendant le long d'une direction transversale à l'axe longitudinal du wagon plat (9), et disposés de manière symétrique l'un par rapport à l'autre par rapport à l'axe longitudinal du wagon plat (9).

## Patentansprüche

1. - Hilfssystem (1) zum Richten und Verlegen eines länglichen Bauelements (2), wie z. B. eines Pfostens, wobei das längliche Bauelement (2) ausgelegt ist, um von einem Fördergerät (10) vom Typ Kran von seiner Spitze gegenüber seiner Basis gehängt zu sein, wobei das System (1) Mittel zur Führung (3) des Schwenkens des länglichen Bauelements (2) zwischen der vertikalen und horizontalen Position umfasst, wobei die Mittel zur Führung (3) einen Griffteil (5), der geeignet ist, das längliche Element (2) in der Nähe der Basis desselben zu erfassen, und einen Stützteil (6) umfassen, der den Griffteil (5) trägt und ausgelegt ist, um auf die Plattform (90) eines Fahrzeugs (9) mit einer Längsrichtung montiert zu sein, wobei der Griffteil (5) mit dem Stützteil (6) durch eine Verbindung verbunden ist, die ein freies Schwenken des Griffteils (5) um eine horizontale Schwenkachse (62B) ermöglicht, die sich gemäß einer als quer bezeichneten Richtung erstreckt, wobei die Querrichtung, nachdem der Stützteil (6) auf dem Fahrzeug (9) montiert ist, senkrecht zur Längsrichtung des Fahrzeugs (9) ist, **dadurch gekennzeichnet, dass** der Stützteil (6) ein translatorisches Führungselement (60) umfasst, das ausgelegt ist, um quer auf der Plattform (90) des Fahrzeugs (9) befestigt zu sein, und mindestens ein beweglicher Arm (61), der den Griffteil (5) trägt, und der auf dem Führungselement (60) montiert ist, um translatorisch in den zwei Richtungen entlang dem Führungselement (60) durch Steuermittel verschiebbar zu sein, so dass der Griffteil (5) geeignet ist, um zwischen einer Betriebsposition, in der der Griffteil (5) seitlich auskragend gegenüber dem Fahrzeug (9) ist, und einer Transportposition verschiebbar zu sein, in der der Griffteil (5) in Richtung des Zentrums der Plattform (90) verschoben wurde und nicht seitlich auskragend gegenüber dem Fahrzeug (9) ist .

2. - System (1) nach Anspruch 1, **dadurch gekennzeichnet, dass** die Verbindung, die ein freies Schwenken des Griffteils (5) ermöglicht, ein Drehzapfen (62) ist.

3. - System (1) nach einem der Ansprüche 1 und 2, **dadurch gekennzeichnet, dass** das Führungselement (60) eine Gleitschienenführung ist, wobei der mindestens eine bewegliche Arm (61) eine Stange ist, die verschiebbar in der Schienenführung (60) montiert ist.

4. - System (1) nach einem der Ansprüche 1 bis 3, **dadurch gekennzeichnet, dass** der Griffteil (5) eine Zange ist, die mindestens zwei Backen (51, 52) umfasst, die ausgelegt sind, um das längliche Bauelement (2) zu umschließen, wobei jede Backe (51, 52) vorzugsweise in Rotation um eine horizontale Drehachse orthogonal zur Schwenkachse (62B) des Griffteils (5) montiert ist, wobei Steuermittel zur Öffnung und zum Versschluss der Zange (5) vorgehsehen sind.

5. - System (1) nach einem der Ansprüche 1 bis 4, **dadurch gekennzeichnet, dass** mindestens eine Anschlagseite das Schwenken nach oben und/oder nach unten des Griffteils (5) begrenzt.

6. - System (1) nach einem der Ansprüche 1 bis 5, **dadurch gekennzeichnet, dass** es außerdem mindestens eine Auflage (4) umfasst, die ausgelegt ist, um auf der Plattform (90) des Fahrzeugs (9) in einem Abstand von den Mitteln zur Führung (3) montiert zu sein, wobei die Auflage (4) einen Rückhalteteil (7) mit einer horizontalen Stützfläche (70A) umfasst, die sich auf einer gleichen Höhe wie der Griffteil (5) befindet, nachdem die Mittel zur Führung (3) und die Auflage (4) auf dem Fahrzeug (9) montiert sind, um geeignet zu sein, als Stütze für das länglichen Bauelement (2) zu dienen, das in einer horizontalen Position platziert ist.

7. - System (1) nach Anspruch 6, **dadurch gekennzeichnet, dass** der Rückhalteteil (7) von einem Stützteil (8) mit mindestens einem beweglichen Arm (81) getragen ist, der in Translation auf einem festen Führungselement (80) montiert ist, das ausgelegt ist, um quer auf der Plattform (90) des Fahrzeugs (9) befestigt zu sein, wobei der mindestens eine bewegliche Arm (81) translatorisch in mindestens einer Richtung entlang dem Führungselement (80) durch Steuermittel verschiebbar ist, so dass der Rückhalteteil (7) geeignet ist, um zwischen einer Betriebsposition, in der der Rückhalteteil (7) seitlich auskragend gegenüber dem Fahrzeug (9) ist, und einer Transportposition verschiebbar zu sein, in der der Rückhalteteil (7) in Richtung des Zentrums der Plattform (90) verschoben wurde und nicht seitlich auskragend gegenüber dem Fahrzeug (9) ist.

8. - Fahrzeug (9), vorzugsweise Schienenfahrzeug, zum Fördern eines länglichen Bauelements (2), wobei das Fahrzeug (9) mindestens einen flachen Wagen umfasst, **gekennzeichnet durch** die Tatsache, dass es mindestens mit einem System (1) zur Unterstützung des Richtens und Verlegens eines länglichen Bauelements (2), wie in einem der Ansprüche 1 bis 7 definiert, ausgestattet ist, das auf der Plattform (90) des flachen Wagens (9) angeordnet ist, wobei das Fahrzeug (9) außerdem vorzugsweise mit einem Hebekran (10) mit Teleskoparmen (11) ausgestattet ist, der auf dem flachen Wagen (9) montiert ist.

9. - Fahrzeug (9) nach Anspruch 8, **dadurch gekennzeichnet, dass** es ein einziges System (1) umfasst, das sich entlang einer Querrichtung zur Längsachse des flachen Wagens (9) erstreckt, von einem Seitenrand zum anderen des flachen Wagens (9), so dass der Griffteil (5) geeignet ist, auskragend mit Bezug auf den flachen Wagen (9) auf einer Seite oder der anderen desselben platziert zu sein.

10. - Fahrzeug (9) nach Anspruch 8, **dadurch gekennzeichnet, dass** es zwei Systeme (1) entlang einer Querrichtung zur Längsachse des flachen Wagens (9) umfasst, und angeordnet auf symmetrische Weise mit Bezug aufeinander mit Bezug auf die Längsachse des flachen Wagens (9).

## Claims

1. - A system (1) for assisting in the erection and placement of a longitudinal building element (2), such as a post, which longitudinal building element (2) is intended to be suspended from a handling machine (10) of the crane type by its top opposite its base, which system (1) comprises means (3) for guiding the pivoting of the longitudinal building element (2) between vertical and horizontal positions, the guiding means (3) comprising a gripping part (5) adapted to grip said longitudinal member (2) in the vicinity of the base thereof and a support part (6) carrying the gripping part (5) and intended to be mounted on the platform (90) of a vehicle (9) having a longitudinal direction, the gripping part (5) being connected to the support part (6) by a connection allowing free pivoting of the gripping part (5) about a horizontal pivoting axis (62B) extending in a so-called transverse direction, which transverse direction is, when the support part (6) is mounted on the vehicle (9), perpendicular to the longitudinal direction of the vehicle (9), **characterised in that** the support part (6) comprises a translational guiding element (60) intended to be transversely fixed to the platform (90) of the vehicle (9), and at least one movable arm (61) carrying the gripping part (5) and mounted on the guiding element (60) so as to be movable in translation in both directions along the guiding element (60) by control means, such that the gripping part (5) is adapted to be moved between an operational position in which the gripping part (5) is laterally cantilevered from the vehicle (9), and a transport position in which the gripping part (5) has been moved towards the centre of the platform (90) and is not laterally cantilevered from the vehicle (9).

2. - The system (1) according to claim 1, **characterised in that** the connection allowing free pivoting of the gripping part (5) is a pivot connection (62).

3. - The system (1) according to one of claims 1 and 2, **characterised in that** the guiding element (60) is a slide guiding rail, the at least one movable arm (61) being a bar slidably mounted in the guiding rail (60).

4. - The system (1) according to any one of claims 1 to 3, **characterised in that** the gripping part (5) is a clamp comprising at least two jaws (51, 52) capable of gripping the longitudinal building element (2), each jaw (51, 52) preferably being mounted so as to rotate about a horizontal rotation axis orthogonal to the pivot axis (62B) of the gripping part (5), means for controlling the opening and closing of the clamp (5) being provided.

5. - The system (1) according to any one of claims 1 to 4, **characterised in that** at least one stop face limits the upward and/or downward pivoting of the gripping part (5) .

6. - The system (1) according to any one of claims 1 to 5, **characterised in that** it also comprises at least one rest (4) intended to be mounted on the platform (90) of the vehicle (9) at a distance from the guiding means (3), the rest (4) comprising a retaining part (7) having a horizontal bearing face (70A) located at the same height as the gripping part (5), once the guiding means (3) and the rest (4) are mounted on the vehicle (9), so as to be able to serve as a support for the longitudinal building element (2) placed in a horizontal position.

7. - The system (1) according to claim 6, **characterised in that** the retaining part (7) is carried by a support part (8) having at least one movable arm (81) mounted in translation on a fixed guiding element (80) intended to be transversely fixed to the platform (90) of the vehicle (9), the at least one movable arm (81) being movable in translation in at least one direction along the guiding element (80) by control means, such that the retaining part (7) is capable of being moved between an operational position in which the retaining part (7) is laterally cantilevered from the vehicle (9), and a transport position in which the retaining part (7) has been moved towards the centre of the platform (90) and is not laterally cantilevered from the vehicle (9).

8. - A vehicle (9), preferably a railway vehicle, for handling a longitudinal building element (2), the vehicle (9) comprising at least one flat car, **characterised in that** it is equipped with at least one system (1) for assisting in the erection and placement of a longitudinal building element (2) as defined in any one of claims 1 to 7, arranged on the platform (90) of the flat car (9), the vehicle (9) being furthermore preferably equipped with a lifting crane (10) with telescopic arms (11) that is mounted on said flat car (9).

9. - The vehicle (9) according to claim 8, **characterised in that** it comprises a single system (1) extending along a direction transverse to the longitudinal axis of the flat car (9), from one side edge of the flat car (9) to the other, such that the gripping part (5) is able to be placed in a cantilevered position with respect to the flat car (9), on either side thereof.

10. - The vehicle (9) according to claim 8, **characterised in that** it comprises two systems (1) extending along a direction transverse to the longitudinal axis of the flat car (9) and arranged symmetrically to each other with respect to the longitudinal axis of the flat car (9) .
